(19) Europäisches Patentamt
European Patent Office
Office européen des brevets

(11) **EP 1 665 231 B1**

(12) **FASCICULE DE BREVET EUROPEEN**

(45) Date de publication et mention
de la délivrance du brevet:
**05.03.2008 Bulletin 2008/10**

(51) Int Cl.:
**G10L 15/06** *(2006.01)*

(21) Numéro de dépôt: **04816199.6**

(22) Date de dépôt: **16.09.2004**

(86) Numéro de dépôt international:
**PCT/FR2004/050438**

(87) Numéro de publication internationale:
**WO 2005/029464 (31.03.2005 Gazette 2005/13)**

(54) **PROCEDE POUR LE DOPAGE NON SUPERVISE ET LE REJET DES MOTS HORS VOCABULAIRE EN RECONNAISSANCE VOCALE**

VERFAHREN FÜR UNBEAUFSICHTIGTER DOPING UND ABLEHNUNG VON WÖRTER AUSSER DEM SPRACHERKENNUNGWORTSCHATZ

METHOD FOR UNSUPERVISED DOPING AND REJECTION OF WORDS NOT IN A VOCABULARY IN VOCAL RECOGNITION

(84) Etats contractants désignés:
**AT BE BG CH CY CZ DE DK EE ES FI FR GB GR HU IE IT LI LU MC NL PL PT RO SE SI SK TR**

(30) Priorité: **16.09.2003 FR 0350544**

(43) Date de publication de la demande:
**07.06.2006 Bulletin 2006/23**

(73) Titulaire: **Telisma**
**35410 Chateaugiron (FR)**

(72) Inventeurs:
• **SOUFFLET, Frédéric**
**F-35410 SAINT-AUBIN-DU-PAVAIL (FR)**
• **BLEAS, Gildas**
**F-35000 RENNES (FR)**
• **COGNE, Laurent**
**F-35150 BOISTRUDAN (FR)**

(74) Mandataire: **Breese, Pierre**
**BREDEMA**
**38, avenue de l'Opéra**
**75002 Paris (FR)**

(56) Documents cités:
**WO-A-01/52239**

• **ARSLAN L M ET AL: "Improved HMM training and scoring strategies with application to accent classification" IEEE INTERNATIONAL CONFERENCE ON ACOUSTICS, SPEECH, AND SIGNAL PROCESSING CONFERENCE PROCEEDINGS, 7 mai 1996 (1996-05-07), - 10 mai 1996 (1996-05-10) pages 589-592, XP002278790 ATLANTA, GA, USA ISBN: 0-7803-3192-3**

**Description**

La présente invention se rapporte au domaine des interfaces vocales.

La présente invention se rapporte plus particulièrement à un moteur de reconnaissance vocale, indépendamment du contexte de l'application vocale particulière : système de reconnaissance de la parole pour serveur téléphonique, dictée vocale, système de commande et contrôle embarqué, indexation d'enregistrements ...

Les logiciels commerciaux actuels de reconnaissance de la parole sont basés sur l'usage de réseaux de Markov cachés (HMM pour Hidden Markov Model en anglais) pour décrire le vocabulaire à reconnaître, et sur un décodage utilisant un algorithme de type Viterbi pour associer à chaque énoncé une phrase de ce vocabulaire.

Les réseaux markoviens en question utilisent le plus souvent des états à densité continue, souvent dénommés GMM pour Gaussian Mixture Model.

Le vocabulaire de l'application, qu'il soit à l'origine basé sur des grammaires ou sur des modèles de langage stochastiques, est compilé en un réseau d'états finis, avec un phonème de la langue utilisée à chaque transition du réseau. Le remplacement de chacun de ces phonèmes par un réseau markovien élémentaire, qui représente ce phonème dans son contexte de coarticulation, produit finalement un grand réseau markovien sur lequel le décodage de Viterbi s'applique. Les réseaux élémentaires eux-mêmes ont été appris grâce à un corpus d'apprentissage et avec un algorithme d'apprentissage maintenant bien connu de type Baum-Welsh, par exemple.

L'art antérieur connaît déjà par le brevet européen EP 060.1778 « Classification de mots-clés/de mots non clés dans la reconnaissance du langage par mots isolés » un procédé pour établir si un signal de parole comprenant un langage numérisé représente un mot-clé ou non. Le signal de parole est préalablement traité en vecteurs caractéristiques par un détecteur de mots-clés par Modèle caché de Markov (HMM). Le détecteur de mots-clés par Modèle caché de Markov a comme sorties des signaux représentant des informations de segmentation de langage et des signaux représentant des notes d'un ensemble de mots-clés comparés au langage. Les signaux représentant les vecteurs caractéristiques du mot parlé sont ensuite traités en utilisant une analyse par descente probabiliste généralisée et un procédé de combinaison par discrimination linéaire en vue de développer un ensemble de notes de confiance qui, en comparaison à un seuil permet de déterminer si le mot clé est détecté.

De façon également connue, après une phase d'extraction acoustique, le signal de parole, qui est conceptuellement une suite de phonèmes continue ou interrompue par des pauses, des silences ou des bruits, est décrit par une suite de vecteurs acoustiques. Le travail de reconnaissance consiste à déterminer quelle suite de phonèmes est, de la façon la plus probable, associée à cette suite de vecteurs acoustiques, cette recherche étant contrainte par le modèle de langage de l'application.

L'algorithme de Viterbi est également connu de l'art antérieur. Il s'agit de déterminer quel parcours dans le réseau markovien de l'application, est le plus probablement associé à une suite de vecteurs acoustiques, ou bien de décider que l'énoncé n'est pas une des phrases que l'application est construite pour reconnaître. Plutôt que de ne retenir que la suite d'états qui a obtenu le meilleur score, il est possible d'en conserver plusieurs, en prenant soin de ne prendre en considération que les suites qui sont effectivement associées à des énoncés différents (et non à des variantes d'un même énoncé, avec par exemple des alignements temporels différents ou bien avec des variantes de prononciation différentes). Cette technique, type de décodage Nbest, peut être utilisée pour obtenir les N meilleurs candidats, avec pour chacun, un score associé, ce score étant d'autant plus élevé que la phrase est plus probable. L'algorithme précédent fournit une liste de candidats avec des scores associés à chacun, et il reste à déterminer si effectivement il est vrai que l'utilisateur a effectivement prononcé un de ces énoncés, ou s'il s'agit d'un autre phonétiquement proche ou même d'un bruit environnant , voir par exemple le document WO 0152239. L'expérience montre que l'usage du score obtenu par chaque séquence n'est pas un bon indice pour conserver une hypothèse, ou bien la rejeter.

Une technique particulière est donc d'utiliser un réseau markovien particulier pour absorber les énoncés hors vocabulaire et les bruits les plus fréquents.

Précisément, ce modèle de rejet est constitué d'un réseau markovien représentant les différents bruits possibles prévus par l'application, mis en parallèle avec un réseau markovien constitué de l'enchaînement de n'importe quelle suite de phonèmes pour la langue utilisée, en nombre quelconque.

Ce réseau est lui-même mis en parallèle avec le réseau effectif de l'application.

Si le décodage de Viterbi remonte un parcours de ce réseau comme meilleur candidat, alors l'énoncé est rejeté.

On peut alors théoriquement savoir si cet énoncé rejeté est du bruit, ou un mot hors vocabulaire non prévu par l'application.

Cette gestion du rejet est efficace quand il s'agit de reconnaître un mot dans une liste, mais devient fragile pour des phrasés plus, complexes. Par exemple, si l'utilisateur commence par un départ de phrase correct (i.e. prévu par la grammaire), puis utilise ensuite des mots inconnus du système, alors il est probable que le score le meilleur sera non pas obtenu par le modèle de rejet, mais par une des phrases grammaticalement prévues pas le système, et qui s'approche le plus de la phrase effectivement prononcée.

Par exemple, avec un vocabulaire basé sur les jours de la semaine (lundi, mardi,... dimanche), un locuteur qui prononce samedi en appuyant particulièrement sur la seconde partie du mot (sameuuuudi), sera reconnu comme jeudi. Le score de la partie finale du mot sera maximisé par une association à la fin du mot jeudi, et malgré son début tout à fait différent, cette contribution au score final sera suffisante pour faire basculer l'algorithme de Viterbi vers une reconnaissance fausse.

L'art antérieur connaît aussi des techniques de dopage ayant pour but d'optimiser les taux de reconnaissance non pas de manière générale par des variantes au niveau des méthodes générales déjà décrites, mais d'améliorer ponctuellement pour une application donnée, les performances de reconnaissance. Lorsqu'une application de reconnaissance vocale est mise en service, il est souvent possible de recueillir des enregistrements des interactions qui ont eu lieu aux cours des dialogues avec le système.

Le modèle de langage étant défini, il est possible, en écoutant ces enregistrements, d'écarter ceux qui n'ont aucun rapport avec l'application (dialogues hors vocabulaire), et de classer les autres dans l'une des catégories suivantes:

- Phrases correctement reconnues.

- Phrases complètement ou partiellement fausses (erreur de reconnaissance).

L'idée du dopage est d'utiliser ces enregistrements pour améliorer les modèles acoustiques généraux de la langue pour une application donnée, en les prenant en compte dans un nouvel apprentissage, qui est basé sur un principe proche de l'apprentissage de Baum-Welsh qui a permis d'obtenir les modèles initiaux généralistes. Mais cette fois, les enregistrements correspondent exactement aux mots utilisés par l'application, dans des conditions similaires à celles de leur utilisation. On obtient alors des réductions des taux d'erreur importantes.

Le dopage supervisé est une méthode manuelle de mise en oeuvre du principe général du dopage que l'on vient de présenter.

Il faut écouter les enregistrements et les classer dans un des ensembles mentionnés ci-dessus.

Pour les phrases complètement ou partiellement fausses, il faut alors déterminer s'il s'agit d'une substitution (la phrase réellement prononcée n'est pas celle reconnue, mais fait partie des phrases admises par le modèle de langage de l'application). Si c'est le cas, on modifie le texte associé. Si ce n'est pas le cas, on l'écarte (bien que dans certaines variantes, elle puisse être utilisée quand même). Cette phrase pourra servir par exemple à améliorer le rejet.

Le dopage supervisé est donc une opération manuelle, donc longue et coûteuse. Typiquement, plusieurs milliers d'enregistrements sont nécessaires pour améliorer de façon visible l'application. Par contre, c'est une méthode tout à fait efficace, et il est typique de réduire dans certains cas les taux d'erreur par un facteur 2.

Comme le dopage supervisé est très coûteux, il est possible d'utiliser un dopage non supervisé.

Dans ce cas, on commence par régler le rejet de façon sévère, et donc rejeter un énoncé douteux plutôt que de risquer une erreur de substitution.

On utilise ensuite les enregistrements comme ci-dessus, sans vérifier par une écoute effective que la phrase reconnue est bien celle prononcée.

Cette méthode peu coûteuse améliore typiquement le taux de reconnaissance pour des phrases qui étaient déjà correctement reconnues, mais renforce les taux d'erreur pour les phrases qui posaient déjà problème.

C'est la raison pour laquelle cette technique est peu utilisée, ou alors est mixée avec certaines opérations supervisées.

La présente invention entend remédier aux inconvénients de l'art antérieur en proposant un procédé nouveau qui permet d'utiliser avec succès le dopage non supervisé et qui augmente également très sensiblement l'efficacité du traitement du rejet en reconnaissance vocale.

Pour ce faire, la présente invention telle que revendiquée dans la revendication 1, est du type décrit ci-dessus et elle est remarquable, dans son acception la plus large, en ce qu'elle repose sur un procédé de reconnaissance de parole comportant une étape de décodage de type Viterbi sur un réseau de Markov, pour obtenir une liste de N candidats, caractérisé en ce que l'on détermine pour chaque phonème Ps source un ensemble associé EAPD de phonèmes Pd fortement différenciables avec ledit phonème source Ps, et en ce que chacun desdits candidats fait l'objet d'un traitement consistant à comparer chacun de ses phonèmes avec les phonèmes dudit ensemble associé EAPD, et à rejeter ledit candidat si l'un au moins des phonèmes évalués est confondu avec un desdits phonèmes dudit ensemble associé.

Avantageusement, la présente invention comporte une étape où les candidats non rejetés font l'objet d'un traitement additionnel, consistant à déterminer pour chaque phonème Ps source un ensemble associé EAPF de phonèmes Pf faiblement différenciables avec ledit phonème source Ps, et en ce que chacun desdits candidats non rejetés lors des étapes précédentes fait l'objet d'un traitement consistant à comparer chacun de ses phonèmes avec les phonèmes dudit ensemble associé EAPF et à exclure des étapes de dopage les portions du signal correspondant au phonème confondu, sans rejeter ledit candidat.

Avantageusement, la présente invention comporte une étape additionnelle de traitement des candidats non rejetés, consistant à déterminer pour chaque phonème Ps source un ensemble associé EAPM de phonèmes Pm moyennement différenciables avec ledit phonème source Ps, et en ce que chacun desdits candidats non rejetés fait l'objet d'un traitement consistant à comparer chacun de ses phonèmes avec les phonèmes dudit ensemble associé EAPM et à rejeter ledit candidat si le phonème est confondu et si l'une au moins des confusions évaluées correspond à un mot valide du dictionnaire.

De préférence, les portions de signal non exclues sont utilisées pour un réapprentissage dudit modèle Markovien et pour une réestimation des ensembles EAPS, EAPM et EAPF, et des comparateurs.

De préférence, les traitements sont répétés.

On comprendra mieux l'invention à l'aide de la description, faite ci-après à titre purement explicatif, d'un mode de réalisation de l'invention, en référence aux figures annexées :

La figure 1 illustre un schéma décrivant les quatre modules du procédé selon l'invention.
La figure 2 illustre un réseau élémentaire markovien du [a] en français selon l'état de l'art.
La figure 3 illustre un réseau élémentaire markovien modifié du [a] en français selon l'invention.
La figure 4 illustre un exemple de matrice de différentiation par Multi Layer Perceptrons (MLP) selon l'invention.

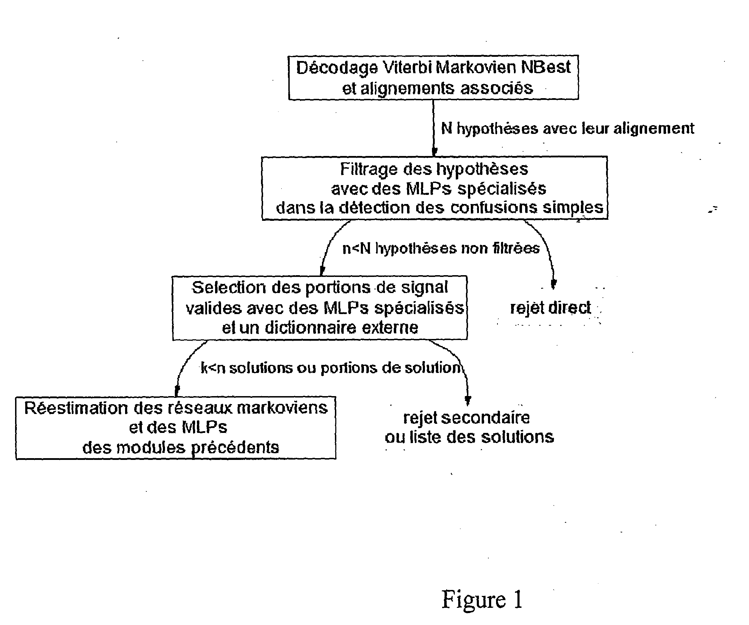

Selon l'invention, illustrée figure 1, le premier module utilise un décodage classique de type Nbest markovien pour l'obtention des N meilleures associations possibles entre l'énoncé de l'utilisateur et un ensemble d'hypothèses plausibles provenant du modèle de langage de l'application.

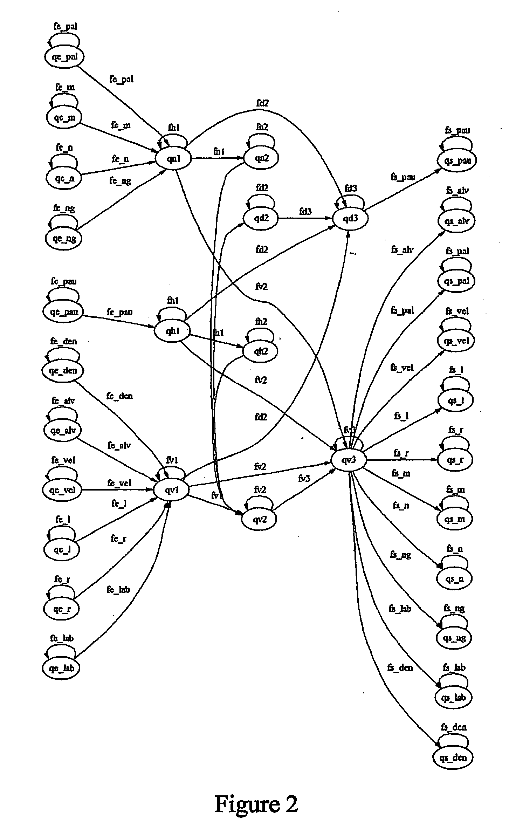

Les réseaux markoviens élémentaires classiques de la langue utilisée sont modifiés pour donner aux cibles des réseaux des propriétés avantageuses que nous allons décrire. Supposons par exemple, que le réseau élémentaire markovien du [a] en français, selon l'état de l'art, a une topologie illustrée par la figure 2. On va alors modifier cette structure et utiliser un réseau différent, pour isoler un nombre réduit de densités.

Le but est que, au cours d'un décodage et indépendamment des contextes acoustiques gauches et droits, on oblige l'alignement final à passer au moins une fois par au moins une des cibles définies.

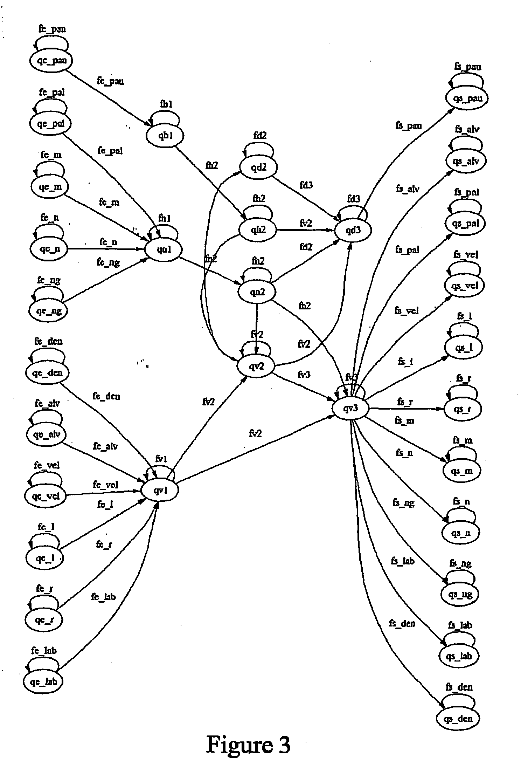

Ce but peut être obtenu par exemple grâce à la topologie illustrée sur la figure 3.

On voit qu'avec cette topologie, on passe obligatoirement par l'une des trois densités : fh2, fn2 ou fv2. La première correspond à l'aspiration, la seconde à la nasalisation, et la troisième au voisement. Ce choix est illustratif, l'important est d'isoler un petit nombre de densités cibles, qui forment un groupe dont l'une au moins est forcément traversée par un alignement utilisant le phonème, quel que soit le contexte. Des modifications basées sur le même principe doivent être apportées à tous les phonèmes de la langue.

Comme résultat, chacun des alignements obtenus en sortie du premier module, contient pour chaque phonème de la séquence, au moins une occurrence d'un représentant des groupes des cibles que nous avons définis.

Le second module est un module nouveau de validation ou d'invalidation de ces hypothèses à l'aide de méthodes non markoviennes. Il est basé, dans une implémentation particulière, sur les Multi Layers Perceptrons (MLP). Les MLP sont définis pour chaque couple de phonèmes de la langue et entraînés pour séparer au mieux ces phonèmes. Ce sont des comparateurs. Ces MLP sont utilisés pour éliminer les hypothèses de la liste des 15-20 meilleures, donc présentant un score élevé, mais qui ne satisfont pas des conditions phonologiques plus strictes d'acceptation.

Ce module, peut ainsi décider de rejeter une ou plusieurs des phrases hypothèses, de façon directe, et sans faire référence au score obtenu par cette hypothèse dans le premier module markovien.

Plus précisément, le premier module de décodage markovien produit, pour chacune des solutions concurrentes, un alignement qui met en relation les trames acoustiques avec des états markoviens des modèles élémentaires associés aux phonèmes.

On s'intéresse alors aux trames qui sont associées à certains phonèmes qui ont des propriétés particulières, principalement d'être rarement confondus avec d'autres phonèmes. Des MLP sont alors entraînés sur ces phonèmes.

Un exemple typique est le groupe des voyelles, qui sont stables et énergétiques, donc peu sensibles aux bruits, et au moins pour certaines, facilement séparables entre elles.

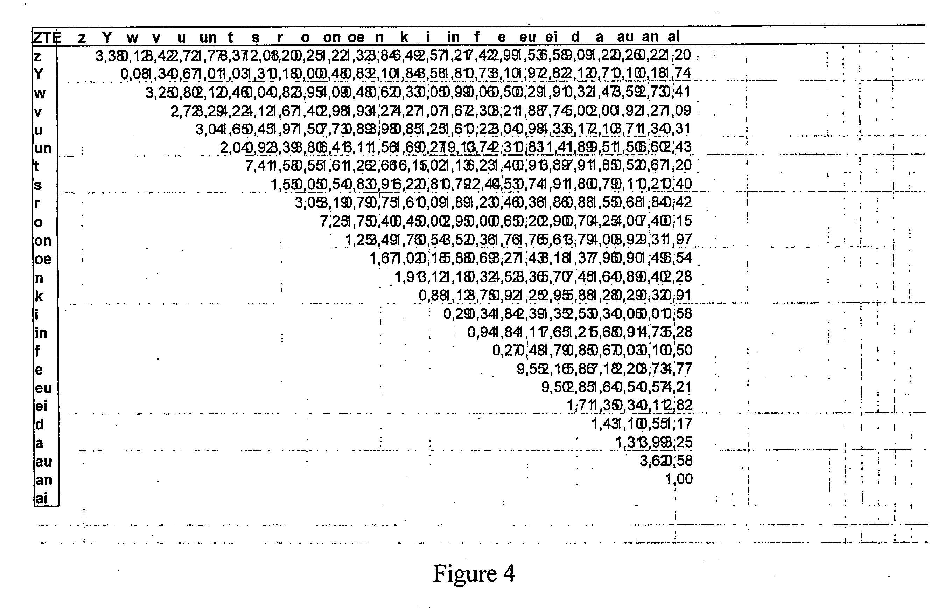

On peut alors pour chaque couple de phonèmes de la langue définir un pourcentage de confusion du MLP correspondant. On obtient ainsi une matrice symétrique dite matrice de différenciation comme représentée dans la figure 4.

Par exemple, si l'on prend la colonne correspondant au phonème [o], on voit que le MLP associé, sur le corpus de parole utilisé pour produire ce tableau, n'a jamais confondu un [o] avec un [y] (case 0), mais a confondu un [o] avec un [un] 3,80 fois sur cent. (case 3,80).

Pour un phonème source fixé Ps, parmi tous les MLPs du tableau, on isole dans un premier ensemble EAPD de phonèmes Pd ceux qui correspondent à des taux de confusion entre phonèmes inférieurs à un seuil bas, par exemple 3%. Ces phonèmes Pd sont dits fortement différenciables avec le phonème source Ps.

On conservera par exemple, le MLP correspondant au couple [o] [y], mais pas celui correspondant au couple [o] [un] .

On utilise alors cet ensemble de MLPs de la façon suivante :

Pour chaque hypothèse produite par le premier module et son alignement, on vérifie que tous les MLPs de l'ensemble décrit ci-dessus, dans lequel ce phonème apparaît, classent bien lés vecteurs acoustiques associés par alignement dans la catégorie adéquate.

Si l'un des MLPs de l'ensemble produit une erreur de classement pour l'un des phonèmes de l'alignement, alors l'hypothèse est rejetée.

Si toutes les hypothèses issues du premier module sont rejetées, alors la phrase prononcée sera classée hors vocabulaire et rejetée.

Les hypothèses qui ont résisté à ce second module sont candidates pour le dopage non supervisé, et sont transmises au troisième module.

Dans un exemple particulier d'implémentation, pour chaque couple de groupe de cibles, nous allons définir un MLP, qui sera entraîné pour séparer au mieux ces deux phonèmes.

Un réseau est constitué dans notre exemple, d'une couche d'entrée de dimension 120, d'une couche cachée de dimension 15 et d'une couche de sortie de dimension 2, où toutes les cellules d'une couche sont reliées à toutes les cellules de la couche précédente.

Le vecteur d'entrée, de dimension 120, est formé, dans un exemple particulier d'implémentation, de la façon suivante :

On intègre les énergies sur un banc de 24 filtres triangulaires équirépartis en échelle Mel entre 188 Hz et 3594 Hz, sur la fenêtre acoustique associée au groupe de cibles, pour l'alignement utilisé. L'échelle Mel retenue est la suivante :

$$f_{Mel} = 2595.\log_{10}(1+\frac{f_{Hz}}{700})$$

On obtient ainsi un vecteur de 24 coefficients V3. On normalise le vecteur V3. On effectue la même opération en utilisant la fenêtre que précède pour obtenir V2, puis celle qui précède encore pour obtenir V1. De même on calcule V4 par le même procédé sur la fenêtre suivante, puis V5 sur la fenêtre qui suit. On compose alors le vecteur d'entrée par concaténation de [V1 V2 V3 V4 V5].

Dans une variante d'implémentation, on pourra normaliser les vecteurs V1, V2, V4 et V5 avec le coefficient de normalisation obtenu pour le vecteur V3.

Dans une autre variante d'implémentation, si l'alignement montre que l'on reste x fois dans des transitions du groupe de cibles, le vecteur V3 pourra être calculé à partir de ces x vecteurs acoustiques (on pourra par exemple utiliser la moyenne des énergies dans chacune des bandes). Les vecteurs V2 et V1 et V4 et V5 seront calculés en utilisant respectivement les fenêtres avant la première transition du groupe de cibles et les fenêtres après la dernière transition du groupe de cibles.

Les cellules d'entrées ne font qu'une copie du vecteur d'entrée.

Pour chaque cellule de la couche cachée et de la couche de sortie, il existe un seuil.

On peut faire apprendre les poids des liaisons et les seuils des cellules du réseau par présentation d'un corpus de vecteurs d'entrée et des sorties désirées correspondantes, et rétropropagation de gradient (descente de gradient couche après couche).

Par apprentissage, on cherche un minimum à l'erreur quadratique moyenne entre les transformées des vecteurs d'apprentissage par le réseau et les vecteurs cibles correspondants. On obtient donc des nuages de points centrés autour de chacun des 2 vecteurs cibles, chacun correspondant à une classe. La discrimination est significative si les étalements de ces nuages sont faibles devant les distances entre les vecteurs cibles. Le réseau optimal est celui qui donne la plus faible erreur quadratique moyenne sur la base de test.

Le troisième module reçoit les hypothèses qui n'ont pas été éliminées par le deuxième module.

Les hypothèses qui vont être traitées dans ce module, faisaient partie de la liste Nbest du premier module, et d'autre part, l'alignement qui leur est associé, est cohérent dans le sens qu'aucun des phonèmes qui le compose n'est 'grossièrement' invalidé dans le deuxième module par les MLPs spécialisés dans la détection des confusions les plus improbables d'un point de vue acoustique.

Ces hypothèses ne sont donc pas trivialement aberrantes'. Si ces hypothèses s'avéraient ne pas correspondre à la phrase réellement prononcée, c'est alors selon toute vraisemblance que l'on aurait affaire à un cas de substitution d'un mot hors vocabulaire existant dans la langue, en lieu et place du mot prévu par la grammaire de l'application. La partie commune aux deux phrases pourra alors sans problème être utilisée pour le dopage de l'application, même si la phrase elle-même devra être rejetée.

Le but du troisième module est de déterminer si nous sommes effectivement dans un cas de substitution de ce type.

Si tel n'est pas le cas, l'hypothèse de plus haut score restant après le traitement du deuxième module est retournée comme résultat de la reconnaissance, et les éventuelles autres hypothèses de score moindre seront les alternatives possibles, moins probables.

Si par contre il existe une présomption de substitution locale, alors le rôle de ce troisième module sera de déterminer quelles parties de la phrase prononcée, et plus précisément quelles parties de la séquence des vecteurs acoustiques calculés pour cette phrase, devront être retenues, et pour cette partie, quels sont les phonèmes qu'il faut mettre en regard pour le dopage lui-même.

Dans ce but, on définit un deuxième ensemble de MLPs qui cette fois, contient les MLPs qui présentent les plus forts taux de confusion possibles entre deux phonèmes.

Ainsi, pour un phonème source fixé Ps, parmi tous les MLPs du tableau, on isole dans un ensemble EAPF de phonèmes Pf ceux qui correspondent à des taux de confusion entre phonèmes supérieurs à un seuil haut, par exemple 10%. Ces phonèmes Pf sont dits faiblement différenciables avec le phonème source Ps.

Avec la matrice de la figure 4, on aura alors par exemple les couples suivants :

[z] [s] : 12,08 %
[t] [k] : 16,15 %
[in] [un] : 19,13 %
[s] [f] : 22,44 %

Si un des alignements n'amène qu'une confusion entre des phonèmes de ces couples, alors l'hypothèse sera considérée comme valide et non rejetée. Par contre, les vecteurs acoustiques correspondant aux trames fautives dans cette substitution ne seront pas retenus dans l'alignement.

Supposons que le mot prononcé, lorsqu'il est traité par le premier étage markovien, retourne la suite Nbest suivante (avec N=3 par exemple).

Zéro : score 1200.
Six: score 200.
Huit: score 50

Supposons que le second module, en utilisant par exemple les MLPs basés sur les couples contenant les [i], élimine les deux dernières hypothèses, mais que la première soit validée.

Supposons alors que dans le troisième module, le MLP associé au couple [s] [z] permette de conclure que le premier phonème est plus vraisemblablement un [s] qu'un [z].

Comme ce MLP fait partie du groupe spécial des forts taux de confusion que nous avons décrits, l'hypothèse sera conservée, mais les trames associées au [z] seront enlevées de la séquence pour le dopage.

Ainsi l'enregistrement apportera une contribution au dopage des trois phonèmes .

[e] [r] [o], le contexte du [e] étant pris entre [z] et [e].

Enfin, le troisième module utilise aussi un troisième ensemble EAPM de phonèmes Pm pour chaque phonème source Ps, à savoir ceux qui ne font pas partie des deux premiers ensembles EAPD et EAPF, et donc qui représentent des couples de phonèmes avec des probabilités de confusion moyennes. Ces phonèmes sont dits moyennement différenciables.

On peut d'ailleurs, dans une variante d'implémentation de l'invention, ne sélectionner dans ce troisième ensemble qu'un sous-ensemble des MLPs restants. Il n'est pas nécessaire pour le fonctionnement du décodeur selon le principe présenté ici, que tous les MLPs soient utilisés au final.

En plus de ce troisième ensemble de MLPs, le troisième module utilise un dictionnaire phonétique des mots de la langue, avec leurs caractéristiques syntaxiques principales (nom masculin ou féminin, par exemple, pour le français).
Ce dictionnaire contient également un indice de fréquence du mot dans l'usage courant de cette langue. Par exemple, le mot 'maison' est plus fréquent que le mot 'maistrance'.

Lorsqu'un des MLPs de l'ensemble détecte une confusion possible entre deux phonèmes d'un couple, ce MLP produira aussi un score de probabilité pour cette confusion (ce score de probabilité de confusion sera fonction du vecteur de sortie du MLP et de l'étalement moyen autour des valeurs cibles lors de la phase d'apprentissage)
Ce score sera multiplié par l'indice de fréquence du mot, le résultat étant comparé à un seuil fixé. 10 est une valeur standard de ce seuil lorsque le taux de fréquence d'un mot est un coefficient compris entre 0 (mot très rare dans le contexte de l'application) et 100 (mot très fréquent dans le domaine de l'application, mais néanmoins hors vocabulaire).

Le mot sera rejeté si un des mots du dictionnaire présente une substitution possible avec un score supérieur au seuil.

Par contre, encore une fois, les phonèmes qui ne sont pas associés au MLP mettant en évidence une substitution possible seront conservés pour le dopage.

Le quatrième module est un module de dopage.

Lorsque suffisamment de trames auront été associées à un phonème, ou à un groupe prédéfini de phonèmes et n'ont pas été rejetées par aucun des modules précédents, il est possible d'utiliser cette association trame phonème pour réévaluer les valeurs des densités gaussiennes, par une des méthodes standard décrites.

De même il est possible de réévaluer chacun des coefficients des MLPs utilisés.

Ainsi, à intervalles réguliers, les réseaux de Markov du premier module et les MLPs des modules suivants seront mis à jour, permettant ainsi d'obtenir un système de plus en plus efficace en taux de reconnaissance.

L'invention est décrite dans ce qui précède à titre d'exemple. Il est entendu que l'homme du métier est à même de réaliser différentes variantes de l'invention sans pour autant sortir du cadre du brevet.

## Revendications

**1.** Procédé de reconnaissance de parole comportant une étape de décodage de type Viterbi sur un réseau de Markov, pour obtenir une liste de N candidats, **caractérisé en ce que** l'on détermine pour chaque phonème Ps source un ensemble associé EAPD de phonèmes Pd fortement différenciables avec ledit phonème source Ps, et **en ce que** chacun desdits candidats fait l'objet d'un traitement consistant à comparer chacun de ses phonèmes avec les phonèmes dudit ensemble associé EAPD, et à rejeter ledit candidat si l'un au moins des phonèmes évalués est confondu avec un desdits phonèmes dudit ensemble associé.

**2.** Procédé de reconnaissance selon la revendication 1, **caractérisé en ce que** les candidats non rejetés font l'objet d'un traitement additionnel, consistant à déterminer pour chaque phonème Ps source un ensemble associé EAPF de phonèmes Pf faiblement différenciables avec ledit phonème source Ps, et **en ce que** chacun desdits candidats non rejeté lors des étapes précédentes fait l'objet d'un traitement consistant à comparer chacun de ses phonèmes avec les phonèmes avec les phonèmes dudit ensemble associé EAPF et à exclure des étapes de dopage les portions du signal correspondant au phonème confondu, sans rejeter ledit candidat.

3. Procédé de reconnaissance selon la revendication 1 ou 2, **caractérisé en ce que** qu'il comporte une étape additionnelle de traitement des candidats non rejetés, consistant à déterminer pour chaque phonème Ps source un ensemble associé EAPM de phonèmes Pm moyennement différenciables avec ledit phonème source Ps, et **en ce que** chacun desdits candidats non rejeté fait l'objet d'un traitement consistant à comparer chacun de ses phonèmes avec les phonèmes dudit ensemble associé EAPM et à rejeter ledit candidat si le phonème est confondu et si l'une au moins des confusions évaluées correspond à un mot valide du dictionnaire.

4. Procédé de reconnaissance selon la revendication 3, **caractérisé en ce que** les portions de signal non exclues sont utilisées pour un ré apprentissage dudit modèle Markovien et pour une réestimation des ensembles EAPS, EAPM et EAPF et de comparateurs

5. Procédé de reconnaissance selon les revendications précédentes, **caractérisé en ce que** les traitements sont répétés.

6. Procédé de reconnaissance selon les revendications 1, 2 ou 3, **caractérisé en ce que** lesdits ensembles EAPD, EAPM et EAPF. sont obtenus à partir d'une matrice de différenciation.

7. Procédé de reconnaissance selon la revendication 6, **caractérisé en ce que** les coefficients de ladite matrice de différenciation sont les taux d'erreurs de comparateurs Multi Layers Perceptrons associés à un couple de phonème.

8. Procédé de reconnaissance selon l'une des revendications 6 ou 7, **caractérisé en ce que** ledit ensemble EAPF est, pour un phonème source Ps donné, l'ensemble des phonèmes dont les taux de différenciation de ladite matrice de différentiation avec ledit phonème source sont supérieurs à un seuil haut.

9. Procédé de reconnaissance selon l'une des revendications précédentes, **caractérisé en ce que** ledit ensemble EAPD est, pour un phonème source Ps donné, l'ensemble des phonèmes dont les taux de différenciation de ladite matrice de différenciation avec ledit phonème source sont inférieurs à un seuil bas.

10. Procédé de reconnaissance selon l'une des revendications précédentes, **caractérisé en ce que** ledit ensemble EAPM est, pour un phonème source Ps donné, l'ensemble des phonèmes dont les taux de différenciation de ladite matrice de différenciation avec ledit phonème source sont compris entre ledit seuil haut et ledit seuil bas.

11. Procédé de reconnaissance selon les revendications 9 et 10, **caractérisé en ce que** ledit seuil bas de différenciabilité est d'environ 3% et ledit seuil haut de différenciabilité est d'environ 10%.

12. Procédé de reconnaissance selon la revendication 3, **caractérisé en ce que** ledit dictionnaire est un dictionnaire phonétique des mots de la langue avec leurs caractéristiques principales et un indice de fréquence du mot dans l'usage courant de la langue.

13. Procédé de reconnaissance selon la revendication 1, **caractérisé en ce que** ledit réseau de markov est un réseau modifié pour isoler un nombre réduit de densités.

**Claims**

1. A speech recognition method comprising a Viterbi decoding step in a Markov network to obtain a list of N candidates, **characterized in that**, for each source phoneme Ps, an associated set EAPD of phonemes Pd which can easily be differentiated from said source phoneme Ps is determined, and **in that** each of said candidates is submitted to a processing consisting in comparing each of its phonemes with the phonemes of said associated cluster EAPD and in rejecting said candidate if at least one of the estimated phonemes is mixed-up with one of said phonemes of said associated cluster.

2. A recognition method according to claim 1, **characterized in that** the non-rejected candidates are submitted to an additional processing, consisting in determining, for each source phoneme Ps, an associated set EAPf of phonemes Pf which cannot easily be differentiated from said source phonemes Ps, and **in that** each one of said candidates not rejected during the previous steps, is submitted to a processing consisting in comparing each one of its phonemes with the phoneme of said associated set EAPF and in excluding from the doping steps the portions of the signal corresponding to the mixed-up phoneme without rejecting said candidate.

**3.** A recognition method according to claim 1 or 2, **characterized in that** it includes an additional step of processing the non-rejected candidates, consisting in determining, for each source phoneme Ps, an associated set EAPM of phonemes Pm differentiated to a certain extent from said source phonemes Ps, and **in that** each one of said non-rejected candidate is submitted to a processing consisting in comparing each one of its phonemes with the phonemes of said associated set EAPM and in rejecting said candidate, if the phoneme is mixed-up and if at least one of the estimated mixing-up corresponds to a word existing in the dictionary.

**4.** A recognition method according to claim 3, **characterized in that** the non-excluded portions of the signal are used for a new training of said Markovian model and for a re-estimation of the sets EAPS, EAPM and EAPF and of comparators.

**5.** A recognition method according to the previous claims, **characterized in that** the processing operations are repeated.

**6.** A recognition method according to claims 1, 2 or 3, **characterized in that** said sets EAPD, EAPM and EAPF are obtained from a differentiation matrix.

**7.** A recognition method according to claim 6, **characterized in that** the coefficients of said differentiation matrix are the error rate of Multi Layers Perceptrons comparators associated with a couple of phonemes.

**8.** A recognition method according to one of claims 6 or 7, **characterized in that** said set EAPF is, for a given source phoneme Ps, the set of the phonemes for which the differentiation rates of said differentiation matrix from said source phoneme exceed a high threshold.

**9.** A recognition method according to one of the preceding claims, **characterized in that** said set EAPD is, for a given source phoneme Ps, the set of phonemes for which the differentiation rates of said differentiation matrix from said source phoneme are under a low threshold.

**10.** A recognition method according to one of the preceding claims, **characterized in that** said set EAPM is, for a given source phoneme Ps, the set of phonemes for which the differentiation rate of said differentiation matrix from said source phoneme are comprised between said high threshold and said low threshold

**11.** A recognition method according to claims 9 and 10, **characterized in that** said low threshold of differentiation is about 3% and said high threshold of differentiation is about 10%.

**12.** A recognition method according to claim 3, **characterized in that** said dictionary is a phonetic dictionary of the language words with their main characteristics and an index of frequence of the word in the current use of the language.

**13.** A recognition method according to claim 1, **characterized in that** said Markov network is a network modified for isolating a reduced number of densities.

**Patentansprüche**

**1.** Verfahren für die Spracherkennung, das einen Schritt mit Decodierung von der Art Viterbi auf einem Markov-Netz umfaßt, um eine Liste mit N Kandidaten zu erzielen, **dadurch gekennzeichnet, daß** man für jedes Quellen-Phonem Ps eine zugehörige EAPD Gruppe mit Phonemen Pd erzielt, die vom besagten Quellen-Phonem Ps stark differenzierbar sind, und dadurch, daß jeder der besagten Kandidaten Gegenstand einer Verarbeitung ist, die darin besteht, jedes seiner Phoneme mit den Phonemen der besagten zugehörigen EAPD Gruppe zu vergleichen und den besagten Kandidaten abzuweisen, wenn mindestens eins der bewerteten Phoneme mit einem der besagten Phoneme der besagten zugehörigen Gruppe verwechselt wird.

**2.** Verfahren für die Erkennung nach Anspruch 1, **dadurch gekennzeichnet, daß** die nicht abgewiesenen Kandidaten Gegenstand einer zusätzlichen Verarbeitung sind, die darin besteht, für jedes Quellen-Phonem Ps eine zugehörige EAPF Gruppe mit Phonemen Pf zu bestimmen, die vom besagten Quellen-Phonem Ps gering differenzierbar sind, und dadurch, daß jeder der bei den vorherigen Schritten nicht abgewiesenen Kandidaten Gegenstand einer Behandlung ist, die darin besteht, jedes seiner Phoneme mit den Phonemen der besagten zugehörigen EAPF Gruppe zu vergleichen und von den Dopingschritten die Abschnitte des Signals auszuschließen, das dem verwechselten Phonem entspricht, ohne den besagten Kandidaten abzuweisen.

**3.** Verfahren für die Erkennung nach Anspruch 1 oder 2, **dadurch gekennzeichnet, daß** es einen zusätzlichen Schritt mit Behandlung der nicht abgewiesenen Kandidaten umfaßt, die darin besteht, für jedes Quellen-Phonem Ps eine zugehörige EAPM Gruppe mit Phonemen Pm zu bestimmen, die durchschnittlich vom besagten Quellen-Phonem Ps differenzierbar sind, und dadurch, daß jeder der nicht abgewiesenen Kandidaten Gegenstand einer Behandlung ist, die darin besteht, jedes seiner Phoneme mit den Phonemen der besagten zugehörigen EAPM Gruppe zu vergleichen und den besagten Kandidaten abzuweisen, wenn das Phonem verwechselmt wird, und wenn mindestens eine der bewerteten Verwechslungen einem gültigen Wort aus dem Wörterbuch entspricht.

4. Verfahren für die Erkennung nach Anspruch 3, **dadurch gekennzeichnet, daß** die nicht ausgeschlossenen Signalabschnitte für ein erneutes Erlernen des besagten Markov-Modells und für eine Neubewertung der Gruppen EAPS, EAPM und EAPT und Vergleichern benutzt werden.

5. Verfahren für die Erkennung nach den vorstehenden Ansprüchen, **dadurch gekennzeichnet, daß** die Behandlungen wiederholt werden.

6. Verfahren für die Erkennung nach den Ansprüchen 1, 2 oder 3, **dadurch gekennzeichnet, daß** die besagten EAPD, EAPM und EAPF ausgehend von einer Differenzierungsmatrix erzielt werden.

7. Verfahren für die Erkennung nach Anspruch 6, **dadurch gekennzeichnet, daß** die Koeffizienten der besagten Differenzierungsmatrix die Fehlerraten von Multi Layer Perceptrons Vergleichern in Verbindung mit einem Phonempaar sind.

8. Verfahren für die Erkennung nach einem der Ansprüche, **dadurch gekennzeichnet, daß** die besagte EAPF Gruppe für ein gegebenes Quellen-Phonem Ps die Gruppe der Phoneme ist, deren Differenzierungssatz zum besagten Quellen-Phonem höher als eine hohe Schwelle liegt.

9. Verfahren für die Erkennung nach einem der vorstehenden Ansprüche, **dadurch gekennzeichnet, daß** die besagte EAPD Gruppe für ein gegebenes Quellen-Phonem Ps die Gruppe der Phoneme ist, deren Differenzierungssatz der besagten Differenzierungsmatrix zum besagten Quellen-Phonem unter als eine untere Schwelle liegt.

10. Verfahren für die Erkennung nach einem der vorstehenden Ansprüche, **dadurch gekennzeichnet, daß** die besagte EAPM Gruppe für ein gegebenes Quellen-Phonem Ps die Gruppe der Phoneme ist, deren Differenzierungssatz der besagten Differenzierungsmatrix zum besagten Quellen-Phonem zwischen der besagten oberen Schwelle und der besagten unteren Schwelle inbegriffen ist.

11. Verfahren für die Erkennung nach den Ansprüchen 9 und 10, **dadurch gekennzeichnet, daß** die besagte untere Schwelle der Differenzierbarkeit circa 3% und die besagte obere Schwelle der Differenzierbarkeit circa 10% beträgt.

12. Verfahren für die Erkennung nach Anspruch 3, **dadurch gekennzeichnet, daß** das besagte Wörterbuch ein phonetisches Wörterbuch der Worte und der Sprache mit ihren wichtigsten Merkmalen und einem Häufigkeitsindex des Wortes im üblichen Sprachgebrauch ist.

13. Verfahren für die Erkennung nach Anspruch 1, **dadurch gekennzeichnet, daß** das besagte Markov-Netz ein modifiziertes Netz ist, um eine geringe Anzahl Dichten zu isolieren.

```
┌─────────────────────────────────┐
│   Décodage Viterbi Markovien NBest │
│      et alignements associés      │
└─────────────────────────────────┘
                │
                │ N hypothèses avec leur alignement
                ▼
┌─────────────────────────────────────┐
│      Filtrage des hypothèses         │
│     avec des MLPs spécialisés        │
│ dans la détection des confusions simples │
└─────────────────────────────────────┘
          │                    │
   n<N hypothèses non filtrées │
          ▼                    ▼
┌──────────────────────────┐
│ Sélection des portions de signal │   rejet direct
│ valides avec des MLPs spécialisés│
│    et un dictionnaire externe    │
└──────────────────────────┘
        │                  │
  k<n solutions ou portions de solution
        ▼                  ▼
┌──────────────────────────┐
│ Réestimation des réseaux markoviens │   rejet secondaire
│          et des MLPs                │   ou liste des solutions
│      des modules précédents         │
└──────────────────────────┘
```

Figure 1

Figure 2

Figure 3

| ZTE | z Y w v u un t s r o on oe n k i in f e eu ei d a au an ai |
|---|---|
| z | 3,38,0,12,8,42,72,1,78,37,12,08,20,0,25,1,22,1,32,3,84,6,49,2,57,1,21,7,42,99,1,53,6,58,9,09,1,22,0,26,0,22,1,20 |
| Y | 0,08,1,34,0,67,1,01,1,03,1,31,0,18,0,00,0,48,0,83,2,10,1,84,8,58,1,81,0,73,1,01,97,2,82,12,0,71,0,10,0,18,1,74 |
| w | 3,25,0,80,2,12,0,46,0,04,0,83,95,4,09,0,48,0,62,0,33,0,05,0,99,0,06,0,50,0,29,1,91,0,32,1,47,3,59,2,73,0,41 |
| v | 2,73,2,94,2,24,1,21,1,67,1,40,2,98,1,93,4,27,4,27,1,07,1,67,2,30,8,21,1,88,7,74,6,00,2,00,1,92,1,27,1,09 |
| u | 3,04,1,65,0,45,1,97,1,50,7,73,0,89,8,98,0,85,1,25,1,61,0,23,04,0,98,4,33,5,17,2,10,8,71,1,34,0,31 |
| un | 2,04,0,92,3,39,8,06,4,16,1,11,56,1,69,0,27,9,13,74,2,31,0,83,1,41,89,5,11,5,06,6,02,43 |
| t | 7,41,1,58,0,55,1,61,1,26,2,66,6,15,0,21,1,36,2,31,4,00,91,3,89,7,91,1,85,0,52,0,67,1,20 |
| s | 1,59,0,09,0,54,8,30,91,6,22,0,81,0,792,44,53,0,74,91,1,80,0,79,0,11,0,21,0,40 |
| r | 3,05,3,19,0,79,0,75,1,61,0,091,89,1,23,0,46,0,36,1,86,0,88,1,59,0,68,1,84,0,42 |
| o | 7,25,1,75,0,40,0,45,0,00,2,95,0,00,0,65,0,20,2,90,0,70,4,25,4,00,7,40,0,15 |
| on | 1,25,8,49,1,76,0,54,8,52,0,36,1,76,1,76,5,61,3,79,4,00,8,929,311,97 |
| oe | 1,67,1,02,0,18,5,88,0,69,8,27,1,43,8,18,1,37,7,96,0,90,1,498,54 |
| n | 1,913,121,18,0,32,4,52,3,36,5,70,7,45,1,64,0,89,0,40,2,28 |
| k | 0,88,1,12,8,75,0,92,1,25,2,95,5,88,1,28,0,29,0,32,0,91 |
| i | 0,29,0,34,0,84,2,39,1,35,2,53,0,34,0,06,0,01,0,58 |
| in | 0,94,1,84,1,11,7,65,1,21,5,68,0,91,4,73,5,28 |
| f | 0,270,48,1,79,0,85,0,67,0,03,0,10,0,50 |
| e | 9,55,2,16,5,86,7,18,2,20,8,734,77 |
| eu | 9,50,2,85,1,64,0,54,0,574,21 |
| ei | 1,711,35,0,34,0,112,82 |
| d | 1,43,1,10,0,55,1,17 |
| a | 1,313,99,3,25 |
| au | 3,62,0,58 |
| an | 1,00 |
| ai | |

Figure 4

EP 1 665 231 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0601778 A

- WO 0152239 A